# EUROPÄISCHE PATENTANMELDUNG

(11) **EP 0 563 548 A2**
(43) Veröffentlichungstag der Anmeldung: **06.10.1993**
(21) Anmeldenummer: 93102101.8
(22) Anmeldetag: 11.02.1993
(51) Int. Cl.: B60R 19/02

(54) **Stossfänger für Fahrzeuge, insbesondere Personenwagen**

(30) Priorität: 31.03.1992 DE 4210476; 04.12.1992 DE 4240826
(71) Anmelder: Dr.Ing.h.c. F. Porsche Aktiengesellschaft, D-70435 Stuttgart (DE)
(72) Erfinder: Palmer, Eberhard, W-7532 Niefern (DE)

(57) **Zusammenfassung**

Ein Stoßfänger für Fahrzeuge, insbesondere Personenkraftwagen (1), umfaßt einen formsteifen Träger (8), der über Halter (10) am angrenzenden Aufbau (2) in Lage ist.

Um den Zeit- und Kostenaufwand bei der Herstellung des formsteifen Trägers und der Halter zu reduzieren, ist vorgesehen, daß die Halter einstückig mit dem formsteifen Träger ausgebildet sind.

## Beschreibung

Die Erfindung betrifft einen Stoßfänger für Fahrzeuge, insbesondere für Personenkraftwagen, gemäß dem Oberbegriff des Anspruches 1.

Bei einem bekannten Stoßfänger der eingangs genannten Gattung (US-PS 4 010 969) werden der formsteife Träger und die Halter getrennt voneinander hergestellt und nachträglich miteinander verbunden. Dieser Anordnung haftet der Nachteil an, daß die Herstellung und Montage der Halter einen erheblichen Zeit- und Kostenaufwand verursachen.

Aufgabe der Erfindung ist es, an einem gattungsgemäßen Stoßfänger den Zeit- und Kostenaufwand bei der Herstellung des formsteifen Trägers und der Halter zu reduzieren.

Erfindungsgemäß wird diese Aufgabe durch die kennzeichnenden Merkmale des Anspruchs 1 gelöst. Weitere, die Erfindung in vorteilhafter Weise ausgestaltende Merkmale enthalten die Unteransprüche.

Die mit der Erfindung hauptsächlich erzielten Vorteile sind darin zu sehen, daß durch die Integration der Halter in den formsteifen Träger eine erhebliche Zeit- und Kosteneinsparung bei der Herstellung des Trägers und der Halter erzielt wird.

Die Kalter werden durch örtlich freigeschnittene, zum Aufbau hin gerichtete Abschnitte des vertikalen Steges des formsteifen Trägers gebildet. Eine zusätzliche Versteifung der Halter wird dadurch erzielt, daß sie zumindest abschnittsweise mit angrenzenden horizontalen Schenkeln des formsteifen Trägers verschweißt sind.

Ferner kann der abgestellte Steg örtlich mit Versteifungssicken versehen sein.
Durch U- oder V-förmige Ausgestaltung des Halters lassen sich hohe Kräfte aufnehmen, wobei die Energieaufnahme durch die Geometrie des Halters und die Einspannlänge (Länge der Schweißnähte) definiert steuerbar ist.

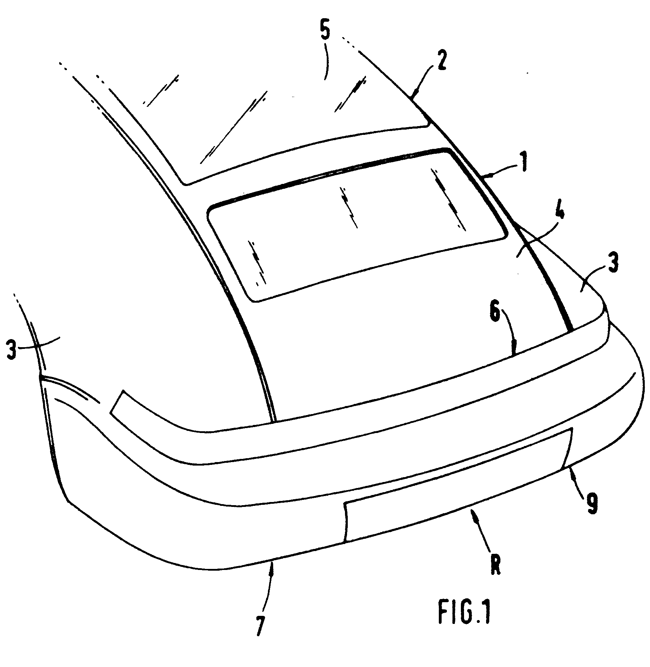

Ein Ausführungsbeispiel der Erfindung ist in der Zeichnung dargestellt und wird im folgenden näher erläutert.
Es zeigt
- Fig. 1: eine Schrägansicht von hinten auf einen Personenkraftwagen mit einem Stoßfänger,

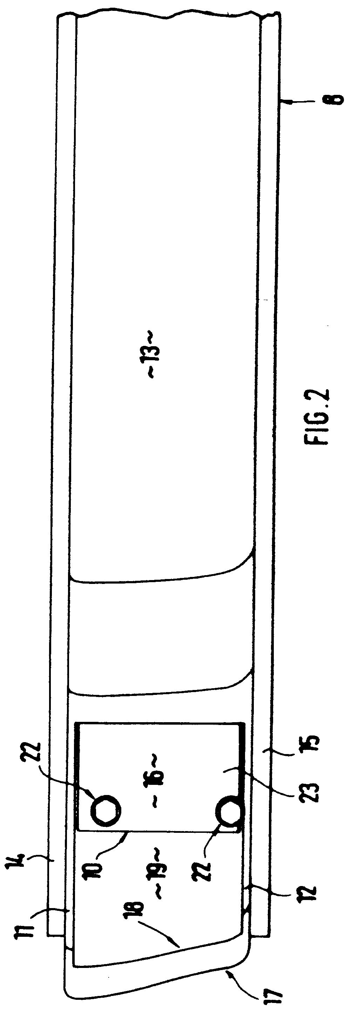

- Fig. 2: eine Teilansicht in Pfeilrichtung R auf einen formsteifen Träger des Stoßfängers,
- Fig. 3: eine Draufsicht auf den formsteifen Träger des Stoßfängers gemäß Fig. 2,
- Fig. 4: einen Schnitt nach der Linie IV-IV der Fig. 3 in größerem Maßstab,
- Fig. 5: einen Schnitt nach der Linie V-V der Fig. 3 in größerem Maßstab und
- Fig. 6: eine Teildraufsicht auf den formsteifen Träger mit einer Zweiten Ausführungsform eines integrierten Halters.

Der Personenkraftwagen 1 weist im dargestellten Bereich einen Aufbau 2 mit Seitenteilen 3, einer Heckklappe 4, einer Heckscheibe 5 sowie einer Leuchteneinheit 6 auf. Die Leuchteneinheit 6 erstreckt sich über einen wesentlichen Teil der Breite des Personenkraftwagens und weist bogenförmige Endabschnitte auf, die der Form der Seitenteile 3 angepaßt sind.

Unterhalb der Leuchteneinheit 6 ist der Aufbau 2 mit einem Stoßfänger 7 versehen, der aus einem formsteifen Träger 8 und einer elastischen, den Endbereich des Aufbaues 2 bildenden Abdeckung 9 besteht.

Der etwa U-förmig profilierte Träger 8 wird durch ein Strangpreßprofil aus Leichtmetall (Aluminiumlegierung) gebildet und ist über Halter 10 am angrenzenden Aufbau 2 in Lage gehalten.

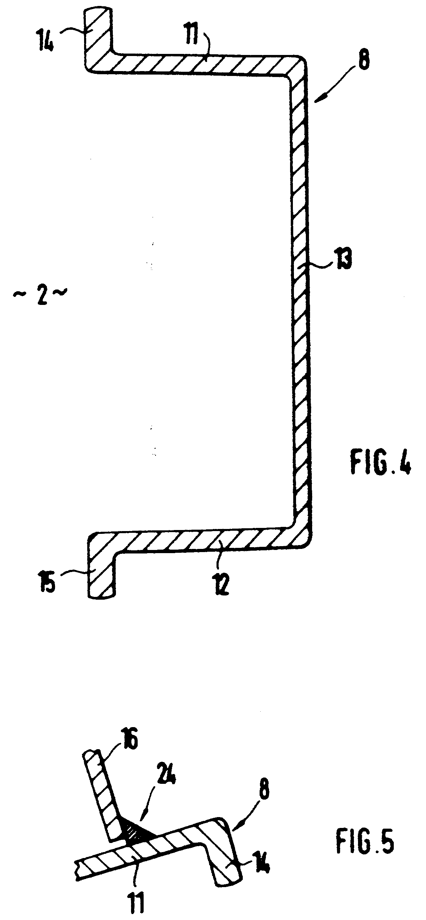

Gemäß Fig. 4 ist die offene Seite des U-förmigen Trägers 8 dem Aufbau 2 zugekehrt, wobei die beiden etwa horizontal ausgerichteten Schenkel 11, 12 durch einen vertikalen Steg 13 miteinander verbunden sind. An den freien Enden der Schenkel 11, 12 sind vertikale Flansche 14, 15 angeformt, wobei sich der dem Schenkel 11 zugeordnete Flansch 14 nach oben hin erstreckt, während der dem Schenkel 12 zugeordnete Flansch 15 nach unten hin gerichtet ist. Es besteht auch die Möglichkeit, daß der formsteife Träger 8 aus Metall, Kunststoff oder dergleichen hergestellt ist und daß er - im Querschnitt gesehen - kastenförmig ausgebildet ist.

Die aus einem nachgiebigen Kunststoff bestehende Abdeckung 9 verläuft mit Abstand zum formsteifen Träger 8 und verkleidet letzteren. Die Abdeckung 9 kann ein- oder mehrteilig ausgebildet sein.

Erfindungsgemäß ist vorgesehen, daß die Kalter 10 einstückig mit dem formsteifen Träger 8 ausgebildet sind.

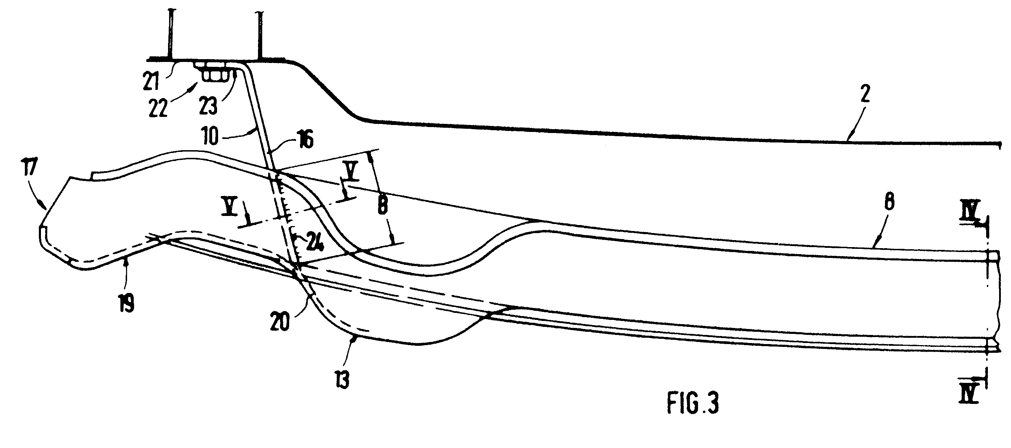

Gemäß Fig. 3 wird jeder Kalter 10 durch einen örtlich freigeschnittenen, zum Aufbau 2 hin gerichteten Abschnitt 16 des Steges 13 des formsteifen Trägers 8 gebildet, wobei der Abschnitt 16 vertikal ausgerichtet ist.

Der Kalter 10 verläuft im Ausführungsbeispiel mit Abstand zum seitlich außenliegenden Endbereich 17 des formsteifen Trägers 8, so daß im Endbereich 17 die Profilstruktur des Trägers 8 bestehen bleibt.

Es besteht aber auch die Möglichkeit, daß der integrierte Halter 10 im seitlich außenliegenden Endbereich 17 des formsteifen Trägers 8 angeordnet ist. Zur Herstellung des integrierten Halters 10 wird der vertikale Steg 13 des U-förmigen Profils des formsteifen Trägers 8 abschnittsweise unterhalb des Schenkels 11 und oberhalb des Schenkels 12 sowie in einem seitlich außenliegenden aufrechten Bereich 18 freigeschnitten und danach der Abschnitt 16 des Steges 13 in gewünschter Weise nach innen bzw. nach hinten in Richtung Aufbau 2 gebogen. Das Freischneiden kann beispielsweise durch Stanzen oder Laserschneiden erfolgen. Durch das Freischneiden entsteht am formsteifen Träger 8 eine randseitig begrenzte Ausnehmung 19.

Entsprechend Fig. 3 schließt sich der Abschnitt 16 an einen gebogenen integrierten Stoßfängerhornabschnitt 20 des formsteifen Trägers 8 an. Danach verläuft der Abschnitt 16 schräg nach hinten und außen in Richtung Aufbau 2. Der dem Aufbau 2 zugekehrte abgewinkelte Endbereich 23 des Abschnitts 16 verläuft parallel zu einer querverlaufenden horizontalen Endwand 21 des Aufbaues 2. Der Endbereich 23 ist am Aufbau 2 mittels schraubbarer Befestigungselemente 22 in Lage gehalten.

Zur Versteifung der Stoßfängerhalterung ist der abgestellte Abschnitt 16 zumindest über einen Teilbereich B seiner Längserstreckung mit den angrenzenden oberen und unteren horizontalen Schenkeln 11, 12 des Trägers 8 verbunden. Dies kann durch Schweißen (Bezugszeichen 24), Verprägen oder dergleichen erfolgen.

Ferner können am Abschnitt 16 nicht näher dargestellte Versteifungssicken vorgesehen sein.

Der Abschnitt 16 kann durch eine gezielte Formgebung so gestaltet werden, daß der Träger 8 nur eine bestimmte Energiemenge aufnehmen kann. Höhere Energien werden durch das Einknicken bzw. das Falten des Abschnittes 16 aufgenommen. Somit wird eine Beschädigung der aufbauseitigen Trägerstruktur vermieden (Sollbruchstelle).

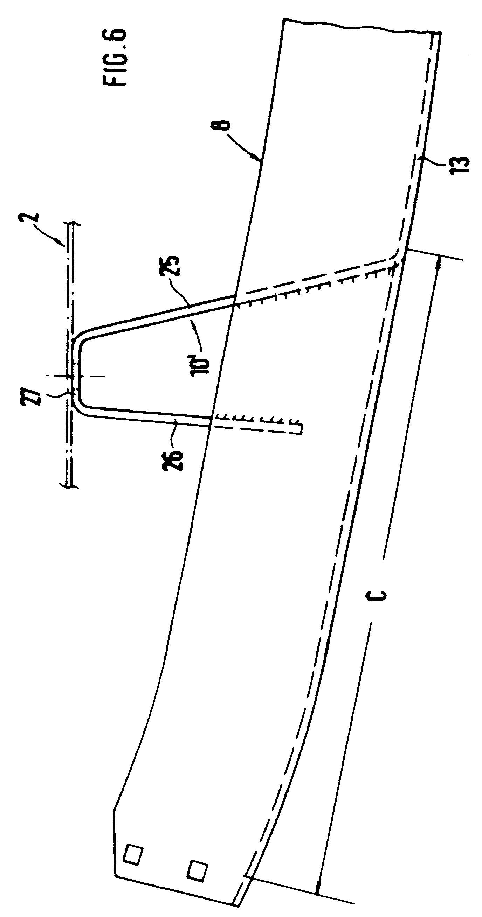

Gemäß Fig. 6 ist der aufrechte Steg 13 in einem seitlich außenliegenden Bereich C oben, unten und an der Seite freigeschnitten und der einstückig mit dem formsteifen Träger 8 ausgebildete Halter 10' ist in der Draufsicht gesehen etwa U-oder V-förmig ausgebildet, wobei die beiden aufrechten, längsgerichteten Abschnitte 25, 26 zumindest abschnittsweise mit den Schenkeln 11, 12 des Trägers 8 fest verbunden sind (beispielsweise durch Schweißen). Der U- oder V-förmige Halter 10' setzt sich aus den schrägverlaufenden Abschnitten 25, 26 und einem querverlaufenden Verbindungssteg 27 zusammen, wobei der Verbindungssteg 27 an der Außenseite der horizontalen Endwand 21 des Aufbaus 2 anliegt und dort mittels schraubbarer Befestigungselemente 22 in Lage gehalten ist. Durch die Geometrie (Winkeligkeit der Abschnitte 25, 26 zum Träger) und die Einspannlange (d.h. Länge der Schweißnaht) läßt sich die Energieaufnahme definiert beeinflussen, wobei für jedes Fahrzeug die Parameter des Halters 10' empirisch ermittelt werden. Durch die beiden mit den Träger 8 verbundenen Abschnitte 25, 26 ist der Kalter 10' in Querrichtung wesentlich steifer als der Kalter 10 gemäß der ersten Ausführungsform. Die offene Seite des U- oder V-förmigen Halters 10' ist dem Träger 8 zugekehrt.

## Patentansprüche

1. Stoßfänger für Fahrzeuge, insbesondere Personenkraftwagen, mit einem formsteifen Träger, der über Halter am angrenzenden Aufbau in Lage gehalten ist, **dadurch gekennzeichnet,** daß die Halter (10, 10') einstückig mit dem formsteifen Träger (8) ausgebildet sind.

2. Stoßfänger nach Anspruch 1, **dadurch gekennzeichnet,** daß jeder Halter (10) durch einen örtlich freigeschnittenen zum Aufbau (2) hin gerichteten Abschnitt (16) des Steges (13) des formsteifen Trägers (8) gebildet wird.

3. Stoßfänger nach Anspruch 2, **dadurch gekennzeichnet,** daß der den Halter (10) bildende Abschnitt (16) des formsteifen Trägers (8) vertikal ausgerichtet ist.

4. Stoßfänger nach den Ansprüchen 1 bis 3, **dadurch gekennzeichnet,** daß der abgestellte Abschnitt (16) über einen Teilbereich seiner Längserstreckung mit angrenzenden horizontalen Schenkeln (11, 12) des formsteifen Trägers (8) verbunden ist.

5. Stoßfänger nach den Ansprüchen 1 bis 4, **dadurch gekennzeichnet,** daß ein abgewinkelter Endbereich (23) des abgestellten Abschnittes (16) am angrenzenden Aufbau (2) anliegt und über lösbare Befestigungselemente (22) mit dem Aufbau (2) verbunden ist.

6. Stoßfänger nach Anspruch 1 bis 4 **dadurch gekennzeichnet,** daß die integrierten Halter (10) mit Abstand zu den seitlich außenliegenden Endbereichen (17) des formsteifen Trägers (8) verlaufen.

7. Stoßfänger nach Anspruch 4, **dadurch gekennzeichnet,** daß der abgestellte Abschnitt (16) mit den angrenzenden horizontalen Schenkeln (11, 12) des formsteifen Trägers (8) verschweißt ist (Bezugszeichen 24).

8. Stoßfänger nach Anspruch 1, **dadurch gekennzeichnet,** daß jeder Halter (10') in der Draufsicht gesehen etwa U- oder V-förmig ausgebildet ist, wobei die offene Seite dem Träger (8) zugekehrt ist.

9. Stoßfänger nach Anspruch 8, **dadurch gekennzeichnet,** daß sich jeder Halter (10') aus zwei längsgerichteten Abschnitten (25, 26) und einem querverlaufenden Verbindungssteg (27) zusammensetzt, wobei die Abschnitte (25, 26) zumindest abschnittsweise mit den Schenkeln (11, 12) des formsteifen Trägers (8) verschweißt sind.
